# FASCICULE DE BREVET EUROPEEN

(11) **EP 0 585 163 B1**
(45) Date de publication et mention de la délivrance du brevet: **15.01.1997**
(21) Numéro de dépôt: 93402055.3
(22) Date de dépôt: 13.08.1993
(51) Int. Cl.: G01S 17/74, G01S 3/784

(54) **Système d'identifiation ami-ennemi protégé contre les intrusions et discriminant**
Gegen Eindringen geschütztes Freund-Feind-Kennungssystem mit Unterscheidungsfähigkeit
IFF system protected against intruders and with ability to discriminate

(30) Priorité: 21.08.1992 FR 9210190
(43) Date de publication de la demande: 02.03.1994
(73) Titulaire: THOMSON-CSF, 75008 Paris (FR)
(72) Inventeur: Defour-Martin, F-92402 Courbevoie Cedex (FR); Courderc, Georges, F-92402 Courbevoie Cedex (FR)
(74) Mandataire: Lincot, Georges

(56) Documents cités:
- EP-A- 0 206 912
- EP-A- 0 301 947
- US-A- 3 891 966
- US-A- 4 136 568
- US-A- 4 866 781

## Description

La présente invention concerne le domaine de l'identification ami-ennemi d'un objet ou d'une cible potentielle dans un champ d'observation et a pour objet un système d'identification ami-ennemi protégé contre les intrusions et discriminant.

Un système d'identification ami-ennemi connu sous le sigle IFF (initiales de "Identification of a Friend from a Foe" selon la terminologie anglo-saxonne), doit permettre à un interrogateur donné d'identifier, sans ambiguïté, un objet dans son champ d'observation comme ami ou ennemi. La procédure d'identification consiste à émettre un signal à partir de la station interrogatrice en direction de l'objet à identifier, puis, dans le cas d'un objet ami, à recevoir sur la station interrogatrice, un signal de réponse codé provenant de cet objet.

Les systèmes d'identification ami-ennemi, que l'on appellera IFF dans ce qui suit, sont composés classiquement d'un émetteur et d'un récepteur pour l'interrogateur ; et d'un moyen récepteur-réémetteur constituant un répondeur pour les stations interrogées, les signaux codés de communication étant véhiculés par des ondes radios, des ondes radars ou des ondes lumineuses. Les ondes radios et les ondes radar présentent des inconvénients importants du fait d'une directivité insuffisante de leur propagation dans l'espace, entraînant de possibles interceptions, et du fait de leur manque de "durcissement", c'est-à-dire de leur perméabilité aux intrusions extérieures et aux faux échos, rendant le système peu fiable. De tels systèmes peuvent alors faciliter le repérage des porteurs équipés d'interrogateurs ou de répondeurs fonctionnant avec de telles ondes.

Pour les systèmes IFF, la difficulté est de réaliser au mieux l'ensemble des qualités suivantes :
. discrétion de l'interrogation,
. discrétion de la réponse,
. fiabilité de cette réponse,
. sélectivité de l'interrogation,
. durcissement aux intrusions,
. réception permanente et omnidirectionnelle et émission directive,
. simplicité d'emploi et de mise en oeuvre,
. fonctionnement automatique ou non,
. intégration sur tous types de porteurs.

Le problème est donc de disposer d'un système IFF simple, discret, sans ambiguïté, omnidirectionnel, permanent, durci, pouvant fonctionner sur une alimentation faible ou autonome et intégrable sur plusieurs types de porteurs.

C'est pourquoi les systèmes IFF les plus récents utilisent un interrogateur très directif comportant des moyens d'émission laser, du type à impulsions ou modulable, et un répondeur comportant un rétroréflecteur modulable, tel qu'un dispositif catadioptrique associé à un écran modulateur. Dans ces conditions, le rétroréflecteur renvoie l'émission reçue selon une certaine modulation à décoder par l'interrogateur. Généralement, la modulation est du genre tout ou rien, ce type de modulation autorisant un fonctionnement à puissance crête élevée permettant d'allonger la portée de la transmission.

Des solutions utilisant des sources laser sont décrites dans les demandes de brevet français numéros FR-A-2 378 404 et FR-A-2 602 346. Cependant, ces solutions ne sont pas entièrement satisfaisantes sur le plan de la protection du fait, essentiellement, de l'étendue limitée du champ de réception couvert par les systèmes de rétroréflexion mis en oeuvre, et de la perméabilité des procédures de validation utilisés.

Il a été proposé, dans une demande de brevet français n° 91 11049 déposée le 6 septembre 1991 au nom de la Demanderesse, un procédé d'identification IFF et un système de mise en oeuvre visant à pallier les inconvénients précités.

Selon ce procédé, il est fait appel à une procédure d'interrogation "durcie", c'est-à-dire hautement protégée d'éventuels intrus, pouvant être déclenchée :
- à partir de toute station située dans un champ de réception couvrant tout l'espace entourant l'objet interrogé et donc dès repérage de l'objet à identifier dans le champ d'observation de la station interrogatrice,
- à l'aide de deux brèves interrogations, matérialisées par deux trains d'impulsions laser codés ; chaque interrogation est suivie, dans le cas d'un objet allié, d'une réponse, la nature de la première de ces réponses, révélée par son niveau d'amplitude, conditionnant l'émission de la seconde interrogation.

Pour cela le procédé d'identification IFF, protégé contre les intrusions, d'un objet repéré par une station interrogatrice disposant d'un interrogateur consiste à émettre en direction de l'objet repéré un faisceau laser impulsionnel codé et directif, à recevoir et analyser en retour un faisceau laser provenant d'un objet interrogé allié, l'objet allié disposant d'un répondeur pouvant répondre activement au faisceau reçu sous forme d'un faisceau laser impulsionnel codé et directif en direction de l'interrogateur ; le procédé met en oeuvre les étapes successives suivantes :
- première interrogation d'alerte par émission d'un faisceau laser impulsionnel et codé à partir de l'interrogateur en direction de l'objet à identifier, dès que cet objet est repéré,
- validation du faisceau laser reçu par l'objet interrogé allié et armé ; après validation, le répondeur de l'objet interrogé allié passe alors d'un état passif à un état actif le rendant prêt à répondre activement,
- analyse de la nature, active ou passive, de la réponse à l'interrogation d'alerte provenant du répondeur et reçue par l'interrogateur,
- seconde interrogation décisive par émission d'un faisceau laser impulsionnel et codé à partir de l'interrogateur en direction de l'objet à identifier, si la première réponse est passive,
- formation d'une réponse active à la seconde interrogation à l'aide du répondeur armé en direction de l'interrogateur,
- analyse de la réponse à l'interrogation décisive provenant du répondeur et reçue.

La solution décrite ci-dessus utilise dans la partie répondeur, un rétroréflecteur fonctionnant selon la technique dite de l'"oeil de chat" qui offre les avantages inhérents à cette technique mais qui en présente également les limitations. Notamment, il est nécessaire d'utiliser une source laser de puissance. La puissance nécessaire est typiquement de l'ordre du megaWatt en mode impulsionnel. Ceci est dû en particulier au fait que la cible étant passive en interrogation, la réponse est proportionnelle à l'inverse de la puissance quatre de la distance interrogateur-répondeur.

Le brevet FR-92 07809 vise à pallier les inconvénients des dispositifs de l'Art Connu, tout en reprenant en partie l'enseignement de la demande de brevet précitée. Elle autorise notamment l'utilisation de diode laser de puissance inférieure au Watt, en mode pulsé.

Pour cela, suivant la solution décrite dans ce brevet, le système d'identification d'un objet dans un champ d'observation comprend un dispositif interrogateur et un dispositif répondeur associé à l'objet, communiquant par rayonnement laser. Le dispositif interrogateur comporte des moyens de recherche et de repérage de l'objet à identifier, des moyens d'émission d'un rayonnement laser d'interrogation couplés optiquement aux moyens de recherche et de repérage, et des moyens de détection de rayonnement laser. Le dispositif répondeur, qui comporte des moyens de détection du rayonnement laser émis par les moyens d'émission du dispositif interrogateur, est solidaire d'un organe lui imprimant un mouvement de rotation. Les moyens de détection du répondeur présentent un champ de réception ayant un premier axe moyen de détection et comportent des circuits de détermination du gisement du répondeur lors de la détection du rayonnement d'interrogation. Le système comprend en outre des moyens d'émission d'un rayonnement laser en réponse à la détection du rayonnement laser d'interrogation, selon un axe moyen d'émission formant un angle déterminé en gisement par rapport au premier axe, différent de zéro, de manière à ce que l'émission du rayonnement laser en réponse à la détection du rayonnement laser d'interrogation soit retardée d'un intervalle de temps préétabli.

Comme indiqué ci-dessus, un système IFF doit satisfaire un certain nombre de critères, les plus importants étant la portée, la discrimination, et la discrétion.

Les solutions décrites ci-dessus satisfont les critères de portée, et de discrétion. Toutefois la discrimination reste une difficulté. En effet, il est nécessaire de pouvoir discriminer par exemple un char vu de face à la limite de portée. C'est-à-dire que le système doit être capable d'avoir une discrimination angulaire de l'ordre de ±0,25mrd (soit 2,5 m à 5 km). Or ces solutions ne permettent pas d'obtenir ce résultat.

L'invention a pour objet un système d'identification ami-ennemi protégé contre les intrusions qui soit de plus discriminant, sans que cette discrimination soit dépendante des conditions externes d'utilisation (distance d'utilisation, transmission atmosphérique), et sans que cette discrimination impose à l'opérateur un pointage et un maintien précis du faisceau discriminant.

Selon l'invention, un système d'identification ami-ennemi protégé contre les intrusions et discriminant comportant :
- d'une part une station interrogatrice disposant d'un dispositif de désignation optronique, d'un interrogateur ayant un émetteur émettant, en direction d'un objet désigné, un faisceau laser impulsionnel codé et directif et d'un détecteur optique détectant en retour un faisceau laser provenant de 1' objet désigné s'il est allié,
- et d'autre part, sur un objet allié, un répondeur, pour répondre activement à un faisceau d'interrogation reçu par un faisceau laser impulsionnel codé et directif en direction de l'interrogateur,
est caractérisé en ce que le détecteur optique comporte plusieurs détecteurs élémentaires indépendants pour couvrir ensemble un champ de réception θ_{c}, mais ayant chacun un champ élémentaire θ_{d}, sous multiple du champ total θ_{c}, déterminant le pouvoir de discrimination du système.

L'invention sera mieux comprise et d'autres caractéristiques apparaîtront à l'aide de la description qui suit, en référence aux figures annexées.
- La figure 1 illustre le problème de la discrimination, en fonction de la distance entre le champ discriminant et l'objet à identifier ;
- La figure 2 illustre la solution selon l'invention au problème de la discrimination, dans un premier mode de réalisation utilisant une matrice de détecteurs ;
- La figure 3 illustre schématiquement le système d'identification selon l'invention ;
- La figure 4 illustre un second mode de réalisation utilisant deux barrettes de détecteurs orthogonales.

Comme décrit ci-dessus, l'optique utilisée dans les systèmes d'identification ami-ennemi permet de réduire considérablement les risques d'intrusion et donc de satisfaire à une grande partie des qualités attendues d'un système d'identification ami-ennemi. L'optique offre un avantage certain compte tenu de la petitesse de sa longueur d'onde. La directivité d'un faisceau laser, ou la grande résolution d'un système optronique de visualisation en sont des exemples. Toutefois, la difficulté reste de pointer avec une qualité suffisante ce dispositif discriminant.

Pour assurer la discrimination, l'homme de l'art peut penser à perfectionner la voie émission ou la voie réception.

Dans le premier cas, la discrimination se fait par le faisceau d'illumination nécessaire à l'interrogation. Un répondeur décalé angulairement de l'axe d'émission verra le flux récolté décroître jusqu'à atteindre la limite de sensibilité du récepteur. Le pouvoir de discrimination peut être défini comme étant la valeur du dépointage pour lequel le flux récolté atteint la limite de sensibilité.

Ce pouvoir de discrimination dépend des caractéristiques du système :
- pupille
- réponse du répondeur
- puissance d'émission
- forme du faisceau
et des conditions externes d'utilisation :
- distance d'emploi
- transmission atmosphérique

Cette dépendance a des conséquences lourdes et est un handicap important. En effet, deux cibles seront rarement identiques pour ce qui concerne la discrimination. Par exemple :
- une cible en limite de portée conduit à un pouvoir de discrimination nul ;
- deux cibles dont la réponse n'est pas la même (sensibilité du récepteur du répondeur, ou surface équivalente laser différentes) ne conduiront pas au même pouvoir de discrimination.

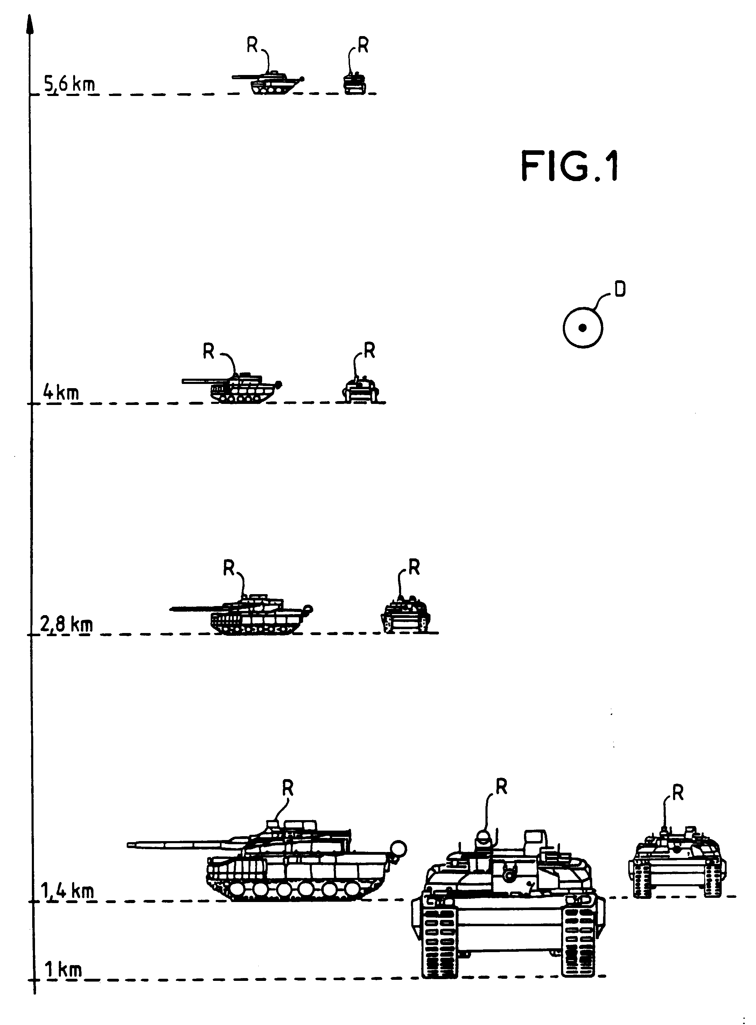

En outre, une discrimination angulaire de cette ampleur implique une contrainte importante pour l'opérateur. Pour illustrer ce fait, la figure 1 montre des vues d'un char pris à différentes distances ; le cercle qui y est joint représente le champ discriminant à la même échelle que les vues et permet d'apprécier la qualité de pointage que l'opérateur devra assurer sur le répondeur R de la cible (représenté sur le char) tout au long de la période d'interrogation. Lorsque la cible est loin, le pointage de l'interrogateur sur la cible assure automatiquement une réception des réponses. Par contre, il apparaît clairement une grande difficulté lorsque la cible est à une distance réduite : l'opérateur devra résoudre le problème de la discrimination, reconnaître le répondeur éventuel et pointer le faisceau d'illumination sur le répondeur pour que l'émetteur porté par le char soit dans le champ du détecteur.

L'utilisation de la voie émission pour résoudre le problème de la discrimination fait donc dépendre le pouvoir de discrimination des caractéristiques du système et des conditions externes d'utilisation et nécessite que l'opérateur pointe et maintienne le faisceau discriminant.

Dans le cas de l'utilisation de la voie de réception, la discrimination se fait par le champ de réception de l'interrogateur. Un répondeur décalé angulairement de l'axe de réception, verra le flux récolté décroître rapidement jusqu'à atteindre la limite de sensibilité en bordure de champ.

Le pouvoir de discrimination ne dépend alors que des caractéristiques de la voie de réception de l'interrogateur (focale, taille du détecteur, qualité de l'optique). Le pouvoir de discrimination sera indépendant des conditions externes d'utilisation. Cela rend cette manière de discriminer particulièrement attrayante. Toutefois la difficulté de pointage et de maintien de l'opérateur reste inchangée.

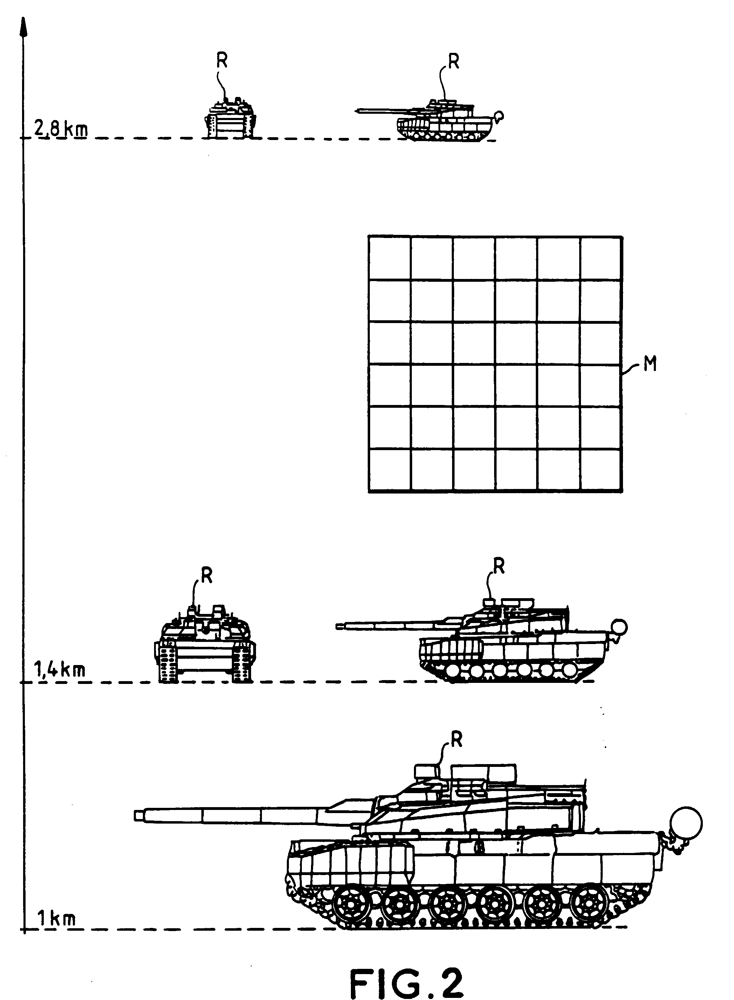

Pour résoudre le problème de la discrimination, la présente invention utilise la voie de réception comme moyen de discrimination. Mais, pour réduire la difficulté de pointage et de maintien de l'opérateur, le récepteur est constitué dans un premier mode de réalisation d'une matrice de détecteurs M dont chacun des éléments est discriminant. La figure 2 montre des vues analogues à celles de la figure 1 d'un char pris à différentes distances. La grille qui y est jointe représente une matrice de détecteurs à l'échelle des vues du char et permet d'apprécier la qualité de pointage que l'opérateur devra assurer sur le répondeur de la cible. Chacun des éléments de la grille représente un détecteur élémentaire qui correspond au pouvoir élémentaire de discrimination de la voie de réception de l'interrogateur.

L'utilisation d'une matrice de détecteurs en réception offre les avantages suivants :
- le pouvoir de discrimination est fixé par les caractéristiques du système et est indépendant des conditions externes d'utilisation ;
- la contrainte de pointage et de maintien sur la cible de l'opérateur est considérablement allégée (par exemple avec une matrice 5x5 la contrainte de pointage passe de ±0,25 mrd à ±1,25 mrd) ;
- une identification simultanée de plusieurs cibles dans le champ de la matrice peut être réalisée.

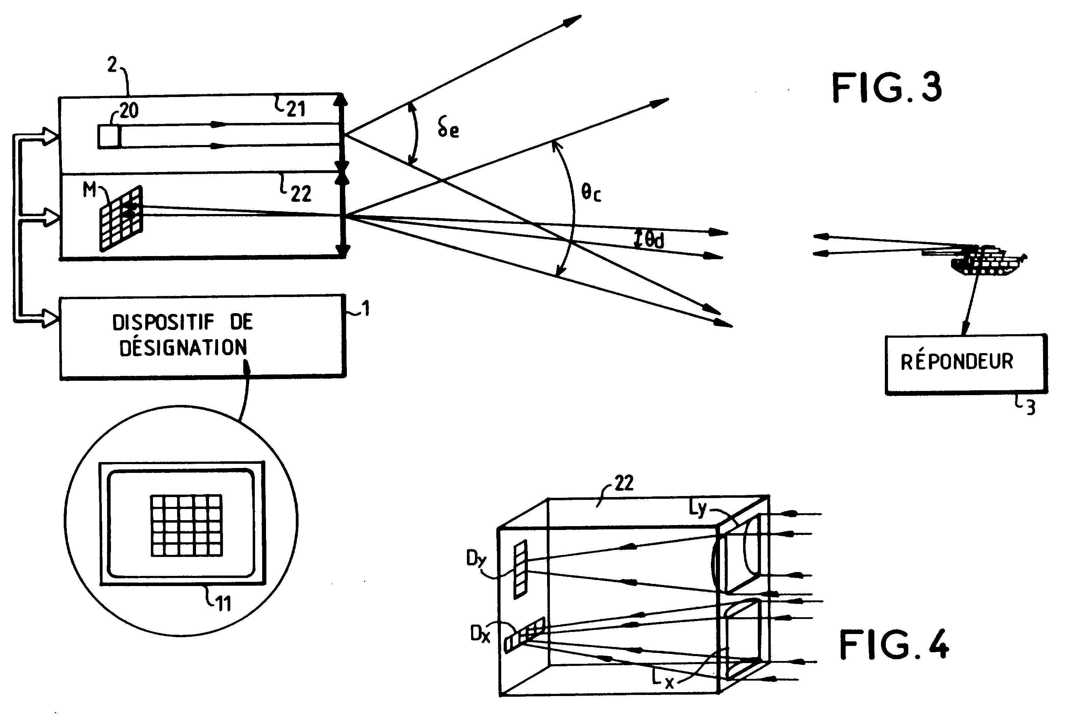

Le système IFF laser discriminant selon l'invention est illustré sur la figure 3. Il comprend un dispositif de désignation optronique 1 commandant un interrogateur sélectif 2, et un répondeur 3 situé sur un objet allié.

Le dispositif de désignation optronique 1 est un viseur ou une caméra.

L'interrogateur 2 comprend :
- une voie d'émission 21 comportant une source laser 20 émettant dans un champ δₑ ;
- une voie de réception 22 comportant une matrice de détecteurs M dont le champ total est θ_{c}. Le champ élémentaire associé à un détecteur vaut θ_{d}.

θ_{d} est le pouvoir de discrimination du système IFF. Le champ d'interrogation δₑ est choisi supérieur au champ θ_{c} analysé en réception. La visualisation du champ d'analyse et des domaines discriminants définis par les détecteurs élémentaires de la matrice est représentée en surimpression sur l'écran 11 du dispositif de désignation optronique 1 de type caméra thermique par exemple.

Le répondeur 3 est un dispositif permettant de fournir une réponse à une illumination laser et peut être par exemple un dispositif répondeur du type décrit par les brevets : FR-A-2 378 404, FR-A-2 602 346, FR-A-91 11049 ou FR-A-92 07809.

L'invention n'est pas limitée au premier mode de réalisation décrit et représenté. Par exemple, la source laser d'émission peut être constituée d'une matrice d'émetteurs émettant chacun dans un champ élémentaire δ_{d} et couvrant, ensemble, le champ d'interrogation δₑ. Cette solution est équivalente à la solution décrite ci-dessus si ce n'est que la puissance nécessaire est alors répartie entre plusieurs sources.

En ce qui concerne la solution mise en oeuvre pour résoudre le problème de la discrimination, la matrice de détecteurs peut être remplacée par un système fonctionnellement équivalent, et notamment par une voie réception comportant deux optiques cylindriques Lₓ, L_{y} perpendiculaires suivant deux axes (X, Y) non représentés respectivement associées à deux barrettes de détecteurs Dₓ, D_{y} de réception également perpendiculaires, comme représenté sur la figure 4. Le seuil de détection des détecteurs élémentaires des barrettes devra être inférieur à celui des détecteurs élémentaires d'une matrice. Dans cette solution, l'addition des signaux issus d'un détecteur d'une barrette à ceux issus d'un détecteur de l'autre barrette donne pour une combinaison X, Y la détection attendue, sans avoir à assurer un pointage précis et un maintien de la direction de détection, comme dans le mode de réalisation mettant en oeuvre une matrice de détecteurs.

D'autre part, dans les différents modes de réalisation les détecteurs, à savoir barrettes ou matrices, peuvent être des détecteurs à transfert de charges CCD.

## Revendications

1. Système d'identification ami-ennemi protégé contre les intrusions et discriminant comportant :
- d'une part, une station interrogatrice disposant d'un dispositif de désignation optronique (1), d'un interrogateur (2) ayant un émetteur émettant, en direction d'un objet désigné, un faisceau laser impulsionnel codé et directif, et d'un détecteur optique détectant en retour un faisceau laser provenant de l' objet désigné s'il est allié,
- et d'autre part, sur un objet allié un répondeur (3), pour répondre activement à un faisceau d'interrogation reçu par un faisceau laser impulsionnel codé et directif en direction de l'interrogateur,
caractérisé en ce que le détecteur optique de l'interrogateur comporte plusieurs détecteurs élémentaires indépendants pour couvrir ensemble un champ de réception θ_{c}, mais ayant chacun un champ élémentaire θ_{d}, sous multiple du champ total θ_{c}, déterminant le pouvoir de discrimination du système.

2. Système selon la revendication 1, caractérisé en ce que le détecteur optique de l'interrogateur est formé d'une matrice de détecteurs ayant chacun le champ élémentaire θ_{d} et la matrice couvrant le champ de réception total θ_{c}, la direction d'un objet allié étant donnée par la position dans la matrice du détecteur activé en réception.

3. Système selon la revendication 1, caractérisé en ce que le détecteur optique de l'interrogateur (2) comporte deux lentilles cylindriques (Lₓ et L_{y}) d'axes perpendiculaires, respectivement associées à deux barrettes de détecteurs (Dₓ et D_{y}) d'axes perpendiculaires, pour former sur chacune des barrettes une image du champ de réception θ_{c}, la direction de l'objet allié étant donnée par les coordonnées des deux détecteurs respectivement activés en réception sur les barrettes (Dₓ et D_{y}).

4. Système selon l'une des revendications 1 à 3, caractérisé en ce que les détecteurs de l'interrogateur sont des détecteurs à transfert de charges de type CCD.

5. Système selon la revendication 1 caractérisé en ce que l'émetteur comporte une source laser couvrant un champ total d'interrogation δₑ supérieur au champ de réception θ_{c}.

6. Système selon la revendication 1, caractérisé en ce que l'émetteur comporte une matrice de sources laser couvrant chacune un champ élémentaire δ_{d} et l'ensemble couvrant le champ d'interrogation δₑ.

## Patentansprüche

1. System zur Freund-Feind-Unterscheidung, das gegen feindliches Eindringen geschützt ist und eine Diskriminationswirkung hat,
- einerseits mit einer Anfragestation, die eine Vorrichtung zur optronischen Bezeichnung (1), ein Anfrageorgan (2) mit einem Sender, der in Richtung auf das bezeichnete Objekt einen impulsförmigen, kodierten und gerichteten Laserstrahl aussendet, und einen optischen Detektor aufweist, der eine Laserantwort von dem bezeichneten Objekt erfaßt, wenn dieses ein befreundetes Objekt ist,
- und andererseits mit einem Antwortorgan (3) auf einem befreundeten Objekt, das aktiv auf einem empfangenen Anfragestrahl durch einen impulsförmigen, kodierten und auf das Anfrageorgan ausgerichteten Laserstrahl antwortet, dadurch gekennzeichnet, daß der optische Detektor des Anfrageorgans mehrere unabhängige Elementardetektoren enthält, die gemeinsam ein Empfangsfeld Θ_{c} überdecken, aber je ein Elementarfeld Θ_{d} besitzen, das ein Untervielfaches des Gesamtfelds Θ_{c} ist, welches das Diskriminationsvermögen des Systems bestimmt.

2. System nach Anspruch 1, dadurch gekennzeichnet, daß der optische Detektor des Anfrageorgans von einer Matrix von Detektoren gebildet wird, die je ein Elementarfeld Θ_{d} besitzen, während die Matrix das ganze Empfangsfeld Θ_{c} überdeckt, wobei die Richtung eines befreundeten Objekts durch die Lage des in Empfangsrichtung aktivierten Detektors in der Matrix gegeben ist.

3. System nach Anspruch 1, dadurch gekennzeichnet, daß der optische Detektor des Anfrageorgans (2) zwei zylindrische Linsen (Lₓ und L_{y}) mit zueinander senkrechten Achsen enthält, die zwei zueinander senkrecht angeordneten Detektorleisten Dₓ und D_{y} zugeordnet sind, um auf jeder der Leistungen ein Bild des Empfangsfelds Θ_{c} zu erzeugen, wobei die Richtung des befreundeten Gegenstands durch die Koordinaten der beiden in Empfangsrichtung aktivierten Detektoren auf den beiden Leiten (Dₓ und D_{y}) gegeben ist.

4. System nach einem der Ansprüche 1 bis 3, dadurch gekennzeichnet, daß die Detektoren der Anfrageorgane Ladungstransferdetektoren vom CCD-Typ sind.

5. System nach Anspruch 1, dadurch gekennzeichnet, daß der Sender eine Laserquelle enthält, die ein ganzes Anfragefeld δₑ überdeckt, das größer als das Empfangsfeld Θ_{c} ist.

6. System nach Anspruch 1, dadurch gekennzeichnet, daß der Sender eine Matrix von Laserquellen enthält, die je ein Elementarfeld δ_{d} überdecken, während die ganze Matrix das Anfragefeld δₑ überdeckt.

## Claims

1. Discriminating IFF system protected against intrusions, including:
- on the one hand, an interrogating station having an optronic designation device (1), an interrogator (2) having an emitter which emits, towards a designated object, an encoded and directional pulsed laser beam, and an optical detector which detects in return a laser beam originating from the designated object if it is an ally,
- and, on the other hand, a responder (3) on an allied object, for actively responding to a received interrogation beam by an encoded and directional pulsed laser beam towards the interrogator,
characterized in that the optical detector of the interrogator includes a plurality of independent elementary detectors for together covering a reception field θ_{c}, but each having an elementary field θ_{d}, which is a sub multiple of the total field θ_{c}, determining the discrimination power of the system.

2. System according to Claim 1, characterized in that the optical detector of the interrogator is formed by a matrix of detectors, each having the elementary field θ_{d}, and the matrix covering the total reception field θ_{c}, the direction of an allied object being given by the position in the matrix of the detector which is activated on reception.

3. System according to Claim 1, characterized in that the optical detector of the interrogator (2) includes two cylindrical lenses (Lₓ and L_{y}) of perpendicular axis, respectively associated with two linear arrays of detectors (Dₓ and D_{y}) of perpendicular axis, for forming an image of the reception field θ_{c} on each of the linear arrays, the direction of the allied object being given by the coordinates of the two detectors respectively activated on reception on the linear arrays (Dₓ and D_{y}).

4. System according to one of Claims 1 to 3, characterized in that the detectors of the interrogator are charge-coupled detectors of the CCD type.

5. System according to Claim 1, characterized in that the emitter includes a laser source covering a total interrogation field δₑ which is greater than the reception field θ_{c}.

6. System according to Claim 1, characterized in that the emitter includes a matrix of laser sources, each covering an elementary field δ_{d}, and the whole covering the interrogation field δₑ.
